# EUROPEAN PATENT APPLICATION

(11) **EP 2 270 357 A1**
(43) Date of publication of application: **05.01.2011**
(21) Application number: 08873488.4
(22) Date of filing: 24.12.2008
(51) Int. Cl.: F16H 1/20, F16H 55/17

(54) **GEAR DEVICE AND POWER TRANSMITTING DEVICE**

(30) Priority: 21.03.2008 JP 2008073431
(71) Applicant: Toyota Jidosha Kabushiki Kaisha, Toyota-shi, Aichi 471-8571 (JP)
(72) Inventor: SHIMIZU, Takashi, Toyota-shi Aichi 471-8571 (JP)
(74) Representative: Albutt, Anthony John
(86) International application number: PCT/JP2008/073396
(87) International publication number: WO 2009/116217

(57) **Abstract**

A gear device that can reduce vibration and noise is provided. The gear device includes a first gear (11) provided at a first shaft, a second gear (21) provided at a second shaft to mesh with the first gear (11), and a third gear (31) provided at a third shaft to mesh with the second gear (21). The second gear (21) includes a through hole (24) extending along a circumferential direction about the rotation axis, formed such that the rigidity in the circumferential direction is varied. The first gear (11) and the third gear (31) are arranged such that the rigidity of the second gear (21) at a meshing point (41) between the first gear (11) and the second gear (21) differs from the rigidity of the second gear (21) at a meshing point (42) between the second gear (21) and the third gear (31), at a certain point of time.

## Description

### TECHNICAL FIELD

The present invention relates to a gear device and a power transmission apparatus. Particularly, the present invention relates to a gear device of a 3-shaft structure, and a power transmission apparatus including the gear device.

### BACKGROUND ART

Conventionally, various approaches are proposed for gear devices. For example, Japanese Patent Laying-Open No. 2005-69401 (Patent Document 1) proposes the concept of varying the rigidity of gear meshing to suppress resonance by forming a communicating hole circumferentially with respect to the rotation axis of one gear in a pair of gears of a 2-shaft structure.

Japanese Patent Laying-Open No. 7-35202 (Patent Document 2) proposes the concept of increasing the support rigidity of the gear shaft in accordance with the direction of vibration. Japanese Patent Laying-Open No. 2-8537 (Patent Document 3) proposes the concept of a 3-shaft gear mechanism having the first, second and third gears arranged such that the phase of the vibration caused by the meshing of the first gear and second gear with the third gear is inverted. Japanese Patent Laying-Open No. 9-133187 (Patent Document 4) proposes the concept of a 3-shaft gear mechanism having the gear tooth corrected by canceling rotation variation caused by tooth error.
Patent Document 1: Japanese Patent Laying-Open No. 2005-69401
Patent Document 2: Japanese Patent Laying-Open No. 7-35202
Patent Document 3: Japanese Patent Laying-Open No. 2-8537
Patent Document 4: Japanese Patent Laying-Open No. 9-133187

### DISCLOSURE OF THE INVENTION

### PROBLEMS TO BE SOLVED BY THE INVENTION

In a gear device, a mesh excitation force due to an error in the gear tooth may be generated to cause resonance of the gears, leading to increased vibration and noise such as gear noise. For a gear device employed in a vehicle, general measures against the aforementioned problem includes improvement in the tooth working accuracy, reinforcing at the gear device case, adding a sound-proof material to the vehicle, or the like. However, such measures are often not readily employed since they cause increase in the vehicle fabrication cost as well as the weight.

In a gear device of a 3-shaft structure having two sites of engagement for one gear, the gear noise will be increased significantly when the meshing points of the two sites resonate at the same time. Although Japanese Patent Laying-Open No. 2005-69401 (Patent Document 1) discloses an approach to suppress resonance by altering the meshing rigidity of the gear pair of a 2-shaft structure, there is no mentioning in relation to a gear device of a 3-shaft structure.

In view of the foregoing, a main object of the present invention is to provide a gear device and power transmission apparatus that can reduce vibration and noise such as gear noise.

### MEANS FOR SOLVING THE PROBLEMS

A gear device according to the present invention includes a first gear provided at a first shaft, a second gear provided at a second shaft to mesh with the first gear, and a third gear provided at a third gear to mesh with the second gear. The second gear is formed to have the rigidity varied in a circumferential direction about a rotation axis. The first gear and third gear are arranged such that the rigidity of the second gear at a meshing position between the first gear and second gear differs from the rigidity of the second gear at a meshing position between the second gear and third gear, at a certain point of time.

The gear device may be configured to have the rigidity of the second gear varied by forming a through hole passing through the second gear in the axial direction, and one of the first gear and third gear arranged in a direction extending from a rotation center axis of the second gear towards the through hole.

The through hole may be formed to extend along a circumferential direction about the rotation axis of the second gear. The through hole may be formed in proximity to a perimeter of the root circle of the second gear.

Furthermore, the gear device may be configured to have the rigidity of the second gear varied by forming a thick portion protruding from a face of the second gear, and one of the first gear and third gear arranged in a direction extending from the rotation center axis of the second gear towards the thick portion. The second gear may include a portion where a through hole is formed and a portion where a connecting region is formed. In this case, the arrangement may be set such that, when one of the first gear and third gear meshes with the second gear at the portion where the connecting region is formed, the other of the first gear and third gear meshes with the second gear at the portion where the through hole is formed.

A power transmission apparatus of the present invention includes any of the gear devices set forth above.

### EFFECTS OF THE INVENTION

The gear device of the present invention is set such that the rigidity of one gear having two meshing sites differs at the meshing points of the two sites. For example, when the rigidity of the meshing point at one of the sites is great, the rigidity of the meshing point at the other of the sites is set small. Accordingly, resonance at each meshing point can be suppressed, allowing reduction in the vibration and noise at the gear device.

### BRIEF DESCRIPTION OF THE DRAWINGS

Fig. 1 is a sectional view of a configuration of a transaxle having a transmission with a gear device of the present embodiment and an axle formed integrally.
Fig. 2 schematically represents a meshing state of a gear device of a 3-shaft structure.
Fig. 3 schematically shows another meshing state of a gear device.
Fig. 4 is a sectional view of a configuration of a transfer case as another example of a power transmission apparatus incorporating a gear device of the present embodiment.
Fig. 5A represents vibration at a meshing point between a first gear and second gear in a first comparative example.
Fig. 5B represents vibration at a meshing point between the second gear and third gear in the first comparative example.
Fig. 5C represents the sum of vibration for the entire gear device in the first comparative example.
Fig. 6A represents vibration at a meshing point between the first gear and second gear in a second comparative example.
Fig. 6B represents vibration at a meshing point between the second gear and third gear in the second comparative example.
Fig. 6C represents the sum of vibration for the entire gear device in the second comparative example.
Fig. 7A represents vibration at a meshing point between the first gear and second gear in an example.
Fig. 7B represents vibration at a meshing point between the second gear and third gear in the example.
Fig. 7C represents the sum of vibration for the entire gear device in the example.

### DESCRIPTION OF THE REFERENCE SIGNS

10, 20, 30 rotation shaft; 11 first gear; 12, 22, 32 rotation center; 19,29, 39 arrow; 21 second gear; 23 connecting region; 24 through hole; 31 third gear; 41, 42 meshing point.

### BEST MODES FOR CARRYING OUT THE INVENTION

Embodiments of the present invention will be described hereinafter with reference to the drawings. In the drawings, the same or corresponding elements have the same reference character allotted, and description thereof will not be repeated.

It is to be noted that each constituent element in the embodiments set forth below is not necessarily mandatory in the invention unless otherwise stated. Moreover, the count and amount mentioned in the embodiments set forth below are exemplary, unless otherwise stated, and the scope of the present invention is not limited to the cited number and amount.

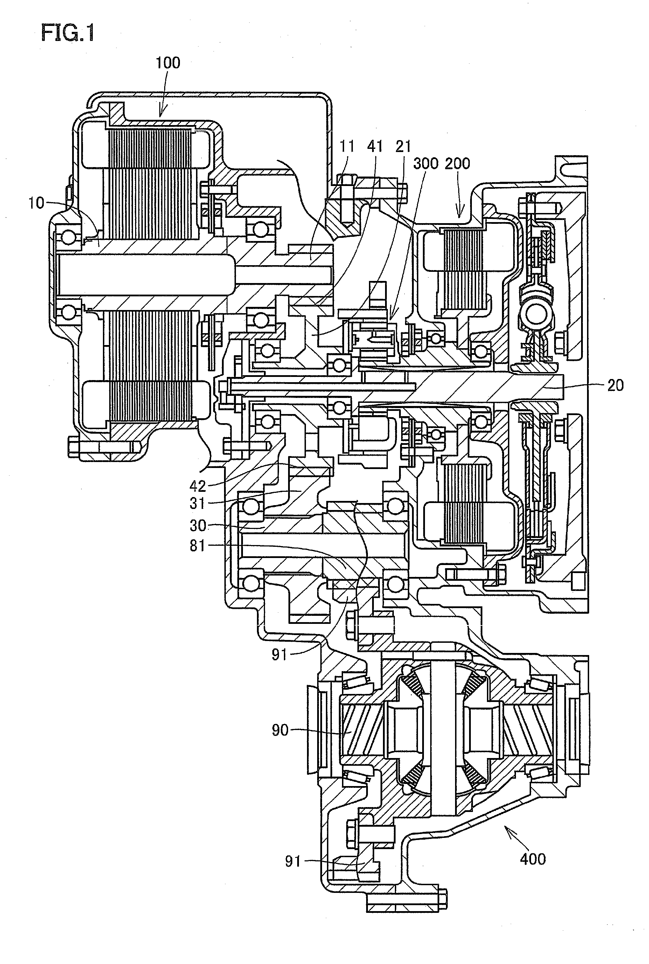

Fig. 1 is a sectional view of a configuration of a transaxle having a transmission with a gear device of the present embodiment and an axle formed integrally. The transmission shown in Fig. 1 is one employed in a hybrid vehicle of front-wheel drive. Referring to Fig. 1, the transaxle includes rotating electric machines 100 and 200, a planetary gear 300 for power splitting, and a differential mechanism 400. Rotating electric machines 100 and 200, planetary gear 300, and differential mechanism 400 are provided in a housing.

Rotating electric machine 100 includes a rotation shaft 10 as a first shaft provided rotatable with respect to the housing. Rotating electric machine 200 includes a rotation shaft 20 as a second shaft, provided rotatable with respect to the housing. Rotating electric machines 100 and 200 include a stator core formed by a stacked layer of electromagnetic steel plates, and a stator coil wound around the stator core. The stator coil has a terminal connected to a feed cable from an external power supply to establish electrical connection with the external power supply and the stator coil.

Planetary gear 300 is connected to rotation shaft 20. Planetary gear 300 splits the engine power transmitted via rotation shaft 20 to rotation shaft 10 and a rotation shaft 30 qualified as a third shaft for transmission.

Differential mechanism 400 includes a final driven gear 91. Final driven gear 91 is connected to rotation shaft 30 through final drive gear 81. Differential unit 90 receiving the power transmitted from rotation shaft 30 transmits equal driving power to both wheels while changing the rotating speed of the left and right wheels at the time of turning.

Thus, the transaxle shown in Fig. 1 functions as a power transmission apparatus transmitting the rotary driving force applied through the crankshaft of the motor and engine for output to the drive wheel.

The transaxle employs a gear device of a 3-shaft structure including a gear with two meshing sites for the transmission providing the motor power and engine power to realize downsizing, weight saving, and low cost. Rotation shaft 10 of Fig. 1 has first gear 11 provided. Rotation shaft 20 has second gear 21 provided. Rotation shaft 30 has third gear 31 provided.

First gear 11 and second gear 21 mesh with each other at a meshing point 41. Second gear 21 and third gear 31 mesh with each other at a meshing point 42. The power transmission apparatus includes a gear device with first gear 11, second gear 21 and third gear 31. Meshing point 41 is where first gear 11 meshes with second gear 21. Meshing point 42 is where second gear 21 meshes with third gear 31.

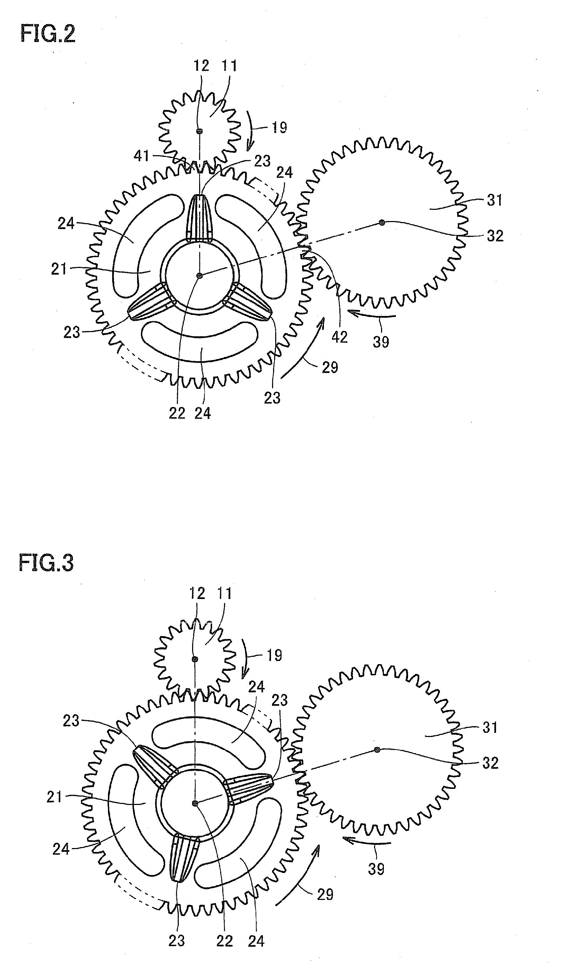

Fig. 2 schematically represents a meshing state of the gear device of a 3-shaft structure. As shown in Fig. 2, second gear 21 has a plurality of through holes 24 formed. A through hole 24 is formed to pass through second gear 21 in the direction of the rotation axis. Through hole 24 is formed to pass through second gear 21 that is a cylindrical gear having a pitch face of a cylindrical configuration from one end face to the other end face.

Through hole 24 is formed to extend along the circumferential direction about the rotation axis of second gear 21. As shown in Fig. 2, second gear 21 is formed with the face taking substantially a circle shape about a rotation center 22. Through hole 24 is formed as an elongated hole extending in the circumferential direction of this circle shape. A connecting region 23 at the face of second gear 21 where through hole 24 is not formed is located between two adjacent through holes 24.

Upon comparing the mass of the substantially sectorial shape of second gear 21 divided circumferentially, the mass of the sectorial shape including the portion where connecting region 23 is formed is relatively great, whereas the mass of the sectorial shape including the portion where through hole 24 is formed is relatively small.

Second gear 21 differing in mass circumferentially has a difference in rigidity in the circumferential direction. The portion of second gear 21 having connecting region 23 formed is a high-rigid portion of relatively high rigidity, whereas the portion of second gear 21 having through hole 24 formed is a low-rigid portion of relatively low rigidity, along the circumferential direction. By providing a connecting region 23 and a through hole 24 in turn along the circumferential direction, second gear 21 is formed to have the rigidity varied in the circumferential direction about the rotation axis.

Second gear 21 is formed such that through hole 24 has a shape of an elongated hole with the major axis along the circumferential direction about the rotation axis of second gear 21. The difference in strength between the portion where connecting region 23 is formed and the portion where through hole 24 is formed becomes greater as the major axis of the elongated hole along the circumferential direction about the rotation axis of second gear 21 increases. Accordingly, the difference in rigidity between the high-rigid portion and the low-rigid portion of second gear 21 becomes greater.

Moreover, through hole 24 is formed in proximity to the perimeter of the root circle of second gear 21. Specifically, through hole 24 is formed at a position in proximity to the perimeter of the root circle, at the inner side of the root circle of second gear 21. Through hole 24 is not located close to rotation center 22. For example, through hole 24 can be formed at the side radially outer than the middle point of the line segment joining rotation center 22 of second gear 21 and the tooth root (the side of the perimeter of the root circle).

Through hole 24 is formed in proximity to the perimeter of the root circle, adjacent to meshing points 41 and 42 of second gear 21. The rigidity of second gear 21 varies at the site adjacent to meshing points 41 and 42. Therefore, the difference in rigidity of second gear 21 between meshing points 41 and 42 becomes greater even more.

In the gear device of a 3-shaft structure including such a second gear 21, only one of first gear 11 and third gear 31 meshing with second gear 21 is arranged in a direction extending from rotation center 22 of second gear 21 towards through hole 24. As shown in Fig. 2, the straight line joining rotation center 22 of second gear 21, meshing point 42, and rotation center 32 of third gear 31 crosses through hole 24. The straight line joining rotation center 22 of second gear 21, meshing point 41 and rotation center 12 of first gear 11 crosses connecting region 23, and does not cross through hole 24.

As described above, the portion of second gear 21 where connecting region 23 is formed and the portion of second gear 21 where through hole 24 is formed have different rigidity. First gear 11 and third gear 31 are arranged such that the rigidity of second gear 21 at meshing point 41 with first gear 11 and the rigidity of second gear 21 at meshing point 42 with third gear 31 each differ.

As shown in Fig. 2, meshing point 42 between second gear 21 and third gear 31 is located close to the middle point of the major axis of through hole 24 that is an elongated hole. Third gear 31 meshes with second gear 21 in proximity to the center point of the length of through hole 24 extending along the circumferential direction of second gear 21. By virtue of the engagement between second gear 21 and third gear 31, the difference in rigidity between meshing point 41 where first gear 11 meshes with second gear 21 corresponding to the portion where connecting region 23 is formed and meshing point 42 where second gear 21 meshes with a third gear 31 becomes greater even more.

Fig. 3 schematically shows another meshing state of the gear device. In Figs. 2 and 3, arrows 19, 29 and 39 represent the rotating direction of first gear 11, second gear 21, and third gear 31, respectively. The gear device in a meshing state as shown in Fig. 2 at a certain point of time attains the meshing state of Fig. 3 at another point of time differing from said certain point of time as a result of rotation of respective gears in the direction of arrows 19, 29 and 39.

In the meshing state of Fig. 3, a straight line joining rotation center 22 of second gear 21, meshing point 41, and rotation center 12 of first gear 11 crosses through hole 24. In contrast, the straight line joining rotation center 22 of second gear 21, meshing point 42, and rotation center 32 of third gear 31 crosses connecting region 23, but not through hole 24.

Similarly, in the meshing state of Fig. 3, only one of first gear 11 and third gear 31 meshing with second gear 21 is arranged in a direction extending from rotation center 22 of second gear 21 towards through hole 24. First gear 11 and third gear 31 are arranged such that the rigidity of second gear 21 at a meshing point 41 with first gear 11 differs from the rigidity of second gear 21 at a meshing point 42 with third gear 31.

As described above, first gear 11, second gear 21 and third gear 31 constituting the gear device are arranged such that the rigidity of second gear 21 differs between meshing point 41 and meshing point 42 at a certain point of time. For example, as shown in Fig. 2, the rigidity at meshing point 41 located at the portion where connecting region 23 is formed is relatively great, whereas the rigidity at meshing point 42 located at the portion where through hole 24 is formed is relatively small, at a certain point of time. Further, as shown in Fig. 3, for example, the rigidity at meshing point 42 located at the portion where connecting region 23 is formed is relatively great, and the rigidity at meshing point 41 located at the portion where through hole 24 is formed is relatively small, at another certain point of time.

Resonance of the gear is determined by the rigidity or mass in the neighborhood of the meshing point. The frequency of resonance becomes higher if the rigidity is great and becomes lower if the rigidity is smaller. Therefore, by altering the rigidity at a plurality of meshing points of the middle gear in the 3-shaft structure, the frequency and level of resonance can be adjusted.

In the gear device of the present embodiment, the rigidity of second gear 21 is varied in the circumferential direction about the rotation axis by having through holes 24 formed. The arrangement is set such that the portion of second gear 21 where through hole 24 is formed meshes with third gear 31 when the portion of second gear 21 where connecting region 23 is formed meshes with first gear 11. The arrangement is set such that the portion of second gear 21 where through hole 24 is formed meshes with first gear 11 when the portion of second gear 21 where connecting region 23 is formed meshes with third gear 31. At a momentary time during operation of the gear device, the rigidity of second gear 21 at meshing point 41 with first gear 11 and the rigidity of second gear 21 at meshing point 42 with third gear 31 differ. Since the rigidity of second gear 21 varies at meshing points 41 and 42, resonance at meshing points 41 and 42 can be suppressed. As a result, vibration and noise at the gear device can be reduced.

In the gear device shown in Figs. 2 and 3, three through holes 24 and a connecting region 23 at three sites are formed. The straight lines extending from rotation center 22 of second gear 21 towards each connecting region 23 form an angle of 120°. In such a gear device, it is desirable that the gears are arranged such that the straight line joining rotation center 12 of first gear 11 and rotation center 22 of second gear 21, and the straight line joining rotation center 22 of second gear 21 and rotation center 32 of a third gear 31 form an angle of 60° or 180°.

In the case where the gear device has the gears arranged such that the straight line joining rotation centers 12 and 22 and the straight line joining rotation centers 22 and 32 form an angle of 120°, second gear 21 must have the position where connecting region 23 and through hole 24 are provided adjusted. By using a second gear having four through holes and a connecting region at 4 sites in such a case, the event of closest approach of a plurality of meshing points to the connecting region of the second gear at the same time can be prevented. Therefore, the resonance at each meshing point can be suppressed.

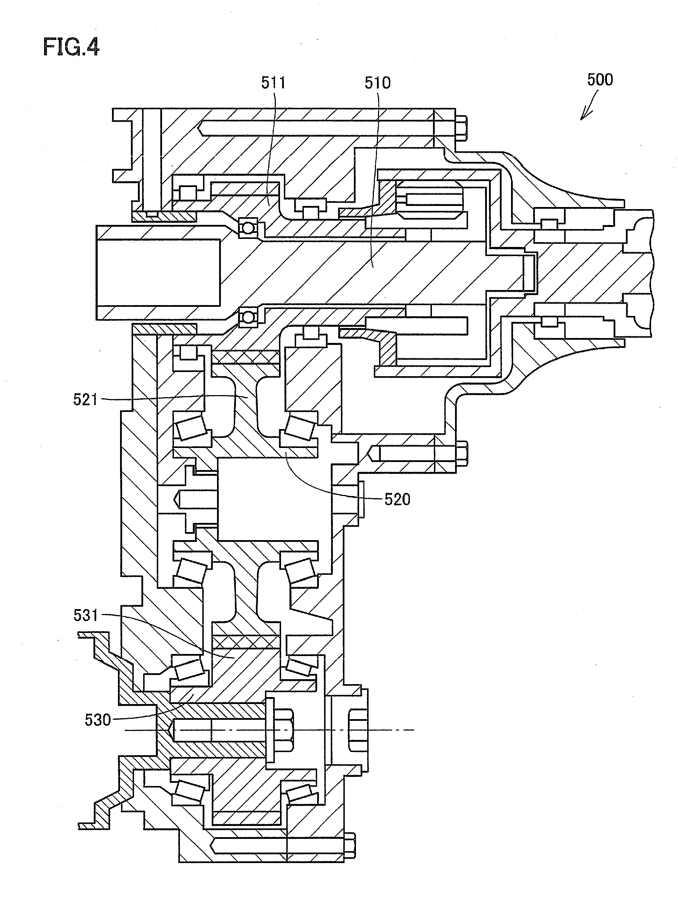

Fig. 4 is a sectional view of a configuration of a transfer case as another example of a power transmission apparatus including a gear device of the present embodiment. A transfer case 500 of Fig. 4 is mounted on a four-wheel-drive car, and serves to split the rotating force output from the transmission to the front propeller shaft at the front wheel side and to the rear propeller shaft at the rear wheel side for output.

Transfer case 500 includes a gear device of a 3-shaft structure. The gear device includes an input shaft 510 to input the rotating force from the transmission, as a first shaft, and a drive gear 511 as the first gear at input shaft 510. An idle gear 521 qualified as a second gear meshing with the first gear is provided at an intermediate shaft 520 that is the second shaft. A driven gear 531 qualified as a third gear meshing with the second gear is provided at an output shaft 530 that is the third shaft.

In the gear device of a 3-shaft structure formed of drive gear 511, idle gear 521, and driven gear 531, a connecting region 23 and a through hole 24 described based on Figs. 2 and 3 are formed at idle gear 521 that is the intermediate gear. Drive gear 511, idle gear 521 and driven gear 531 are arranged such that the rigidity of idle gear 521 at a meshing point with drive gear 511 differs from the rigidity of idle gear 521 at a meshing point with driven gear 531. Accordingly, the resonance at each meshing point can be suppressed, allowing vibration and noise at the gear device to be reduced.

Although the above description is based on the case where the rigidity of the second gear is altered by forming a through hole passing through the second gear in the axial direction, the configuration of altering the rigidity of the second gear is not limited thereto. For example, a thick portion protruding outwards may be formed at a face of the second gear to increase the mass at the portion where the thick portion is provided, leading to variation in the rigidity of the second gear. Moreover, by forming a recessed portion indented on the face of the second gear to reduce the mass of the portion at the recessed portion, the rigidity of the second gear may be altered.

By arranging only one of the first gear and third gear meshing with the second gear in a direction extending from the center axis of rotation of the second shaft towards the aforementioned thickness portion or recessed portion, resonance at the meshing point of each gear can be suppressed. Therefore, the vibration and noise at the gear device can be reduced.

### Examples

Examples of the present invention will be described hereinafter. A simulation of calculating the amount of vibration at the entire gear device was conducted for a gear device of a 3-shaft structure that includes a second gear with a through hole set forth above. As a first comparative example, the entire amount of vibration at a gear device was calculated for a gear device that includes a second gear without a through hole formed. As a second comparative example, the entire amount of vibration at a gear device was calculated for a gear device including a second gear having a through hole formed, and including first and third gears both arranged in a direction extending from the rotation center of the second gear towards the connecting region or through hole.

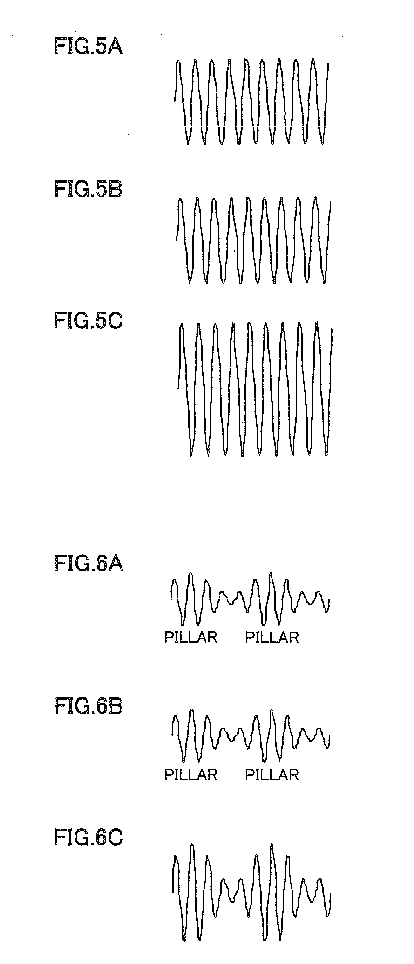

Figs. 5A to 5C represent the vibration of the gear device of the first comparative example. Fig. 5A represents vibration at the meshing point between the first gear and second gear in the first comparative example. Fig. 5B represents vibration at the meshing point between the second gear and third gear in the first comparative example. Fig. 5C represents the sum of vibration for the entire gear device in the first comparative example.

The vibration of the entire gear device is obtained by the sum of the vibration at each meshing point. In the first comparative example, the mass of the second gear does not vary in the circumferential direction about the rotation axis. The rigidity of the second gear also does not change. Therefore, resonance occurred at the meshing points, as shown in Figs. 5A and 5B. As a result of occurrence of vibration in the same phase at the meshing points of two sites, the entire vibration of the gear device was increased significantly, as shown in Fig. 5C.

Figs. 6A to 6C represent the vibration at the gear device in the second comparative example. Fig. 6A represents vibration at the meshing point between the first gear and second gear in the second comparative example. Fig. 6B represents vibration at the meshing point between the second gear and third gear in the second comparative example. Fig. 6C represents the sum of vibration for the entire gear device in the second comparative example. In Figs. 6A and 6B, the section specified by "pillar" indicates that the first or third gear meshing with the second gear was located in the direction extending from the rotation center of the second gear towards the connecting region.

Since a through hole was formed in the second comparative example, the mass of the second gear varied in the circumferential direction about the rotation axis, and the rigidity of the second gear varied. Therefore, the resonance at each meshing point was suppressed, as shown in Figs. 6A and 6B. However, since the vibrations generated at the meshing points of two sites were in the same phase with matching vibration peaks, the amplitude of the entire gear device was increased. As a result, although the amplitude was reduced as compared with that of the first comparative example, the amplitude of the entire gear device was still great.

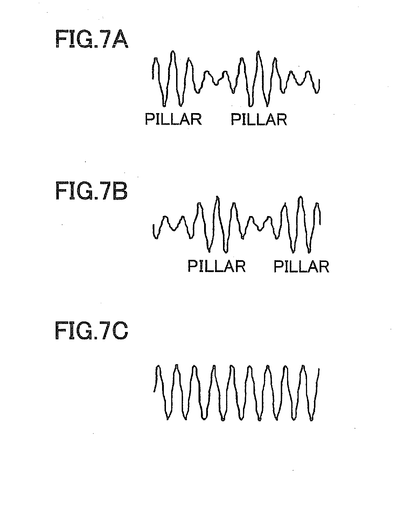

Figs. 7A to 7C represent the vibration at the gear device according to the present example. Fig. 7A represents the vibration at the meshing point between the first gear and second gear of the present example. Fig. 7B represents the vibration at the meshing point between the second gear and third gear of the present example. Fig. 7C represents the sum of the vibration of the entire gear device of the present example.

In the present example, the resonance at each meshing point was suppressed, as shown in Figs. 7A and 7B, likewise with the second comparative example. Moreover, the vibrations generated at the meshing points of the two sites were in inversed phase with deviation in the vibration peaks. Therefore, the amplitude of the total vibration will not be increased greatly. As a result, the amplitude of the entire gear device was further reduced than that of the second comparative example, as shown in Fig. 7C.

The examples and comparative examples set forth above show that, by suppressing the resonance at the meshing points of the gears in a gear device of a 3-shaft structure, vibration at the gear device can be reduced, allowing the noise generated at the gear device to be also reduced.

It should be understood that the embodiments and examples disclosed herein are illustrative and non-restrictive in every respect. The scope of the present invention is defined by the terms of the claims, rather than the description above, and is intended to include any modification within the scope and meaning equivalent to the terms of the claims.

### INDUSTRIAL APPLICABILITY

The present invention is advantageously applicable to particularly a gear device of a 3-shaft structure employed in a transmission, a transfer case or the like of a vehicle.

## Claims

1. A gear device comprising:
a first gear (11) provided at a first shaft (10), a second gear (21) provided at a second shaft (20) to mesh with said first gear (11), and a third gear (31) provided at a third shaft (30) to mesh with said second gear (21),
said second gear (21) being formed to have a rigidity varied in a circumferential direction about a rotation axis,
said first gear (11) and said third gear (31) being arranged such that the rigidity of said second gear (21) at a meshing position (41) between said first gear (11) and said second gear (21) differs from the rigidity of said second gear (21) at a meshing position (42) between said second gear (21) and said third gear (31), at a certain point of time.

2. The gear device according to claim 1, wherein
the rigidity of said second gear (21) is varied by forming a through hole (24) passing through said second gear (21) in an axial direction, and
one of said first gear (11) and said third gear (3 1) is arranged in a direction extending from a center axis (22) of rotation of said second gear (21) towards said through hole (24).

3. The gear device according to claim 2, wherein said through hole (24) is formed to extend along a circumferential direction about a rotation axis of said second gear (21).

4. The gear device according to claim 2, wherein said through hole (24) is formed in proximity to a perimeter of a root circle of said second gear (21).

5. The gear device according to claim 1, wherein
the rigidity of said second gear (21) is varied by forming a thick portion protruding from a face of said second gear (21), and
one of said first gear (11) and said third gear (3 1) is arranged in a direction extending from a center axis (22) of rotation of said second gear (21) towards said thick portion.

6. The gear device according to claim 1, wherein
said second gear (21) includes a portion where a through hole (24) is formed and a portion where a connecting region (23) is formed, and
when one of said first gear (11) and said third gear (31) meshes with a portion of said second gear (21) where said connecting region (23) is formed, the other of said first gear (11) and said third gear (31) is set to mesh with a portion of said second gear (21) where said through hole (24) is formed.

7. A power transmission apparatus including a gear device defined in any of claims 1 to 6.
